(19) **Europäisches Patentamt**

**European Patent Office**

**Office européen des brevets**

(11) Veröffentlichungsnummer: **0 278 537**
A1

(12) # EUROPÄISCHE PATENTANMELDUNG

(21) Anmeldenummer: **88200020.1**

(22) Anmeldetag: **09.01.88**

(51) Int. Cl.⁴: **B01D 53/34** , **C22B 43/00**

(30) Priorität: **22.01.87 DE 3701764**

(43) Veröffentlichungstag der Anmeldung:
**17.08.88 Patentblatt 88/33**

(84) Benannte Vertragsstaaten:
**BE DE ES SE**

(71) Anmelder: **NORDDEUTSCHE AFFINERIE AG**
**Alsterterrasse 2**
**D-2000 Hamburg 36(DE)**

(72) Erfinder: **Winkler, Hermann, Dr.**
**Jahnstrasse 28 d**
**D-2105 Seevetal 3(DE)**
Erfinder: **Reppenhagen, Claus**
**Kastanienweg 24**
**D-2153 Neu Wulmstorf(DE)**

(74) Vertreter: **Rieger, Harald, Dr.**
**Reuterweg 14**
**D-6000 Frankfurt a.M.(DE)**

(54) **Verfahren zum Abscheiden von gasförmigem Quecksilber aus Gasen.**

(57) Es wird ein Verfahren beschrieben zum Entfernen von gasförmigem metallischem und oxidiertem Quecksilber aus dieses enthaltenden Gasen, wobei ein Quecksilber sowie Sauerstoff und Schwefeldioxid enthaltender Gasstrom mit einer Kupfersalz enthaltenden Lösung in Kontakt gebracht wird. Um bei großen Gasdurchsätzen eine wirtschaftliche Entfernung des Quecksilbers aus dem Gasstrom zu bewirken, wird ein weitgehend entstaubter und gekühlter Gasstrom mit einer Kupfer-II-ionen enthaltenden schwefelsauren, chloridhaltigen Waschlösung bei einer Temperatur von 20 bis 100, vorzugsweise 50 bis 70°C, behandelt, die das Quecksilber oxidiert. Die gebildeten Hg-I-und Cu-I-Verbindungen werden in situ aufoxidiert. Das Hg-II wird in einen löslichen Quecksilberchlorokomplex überführt und dieser aus der sauren Lösung abgetrennt. Nach einer besonderen Ausführungsform enthält die Waschlösung zusätzlich Quecksilber-II-ionen, vorzugsweise als Hg-II-Chlorid.

## Fig.3

EP 0 278 537 A1

## Verfahren zum Abscheiden von gasförmigem Quecksilber aus Gasen

Die Erfindung betrifft ein Verfahren zum Abscheiden von gasförmigem Quecksilber aus SO₂-haltigen Gasen.

Bei der pyrometallurgischen Verarbeitung sulfidischer Erze wird ein Gas gewonnen, das üblicherweise etwa 4 bis 16 % Schwefeldioxid neben unterschiedlichen Mengen flüchtiger Verbindungen, in Abhängigkeit von der Erzzusammensetzung, enthält. Hierbei handelt es sich im allgemeinen um Verbindungen von Arsen, Selen, Antimon, Zink und Blei wie auch um in freier Form vorliegendes Quecksilber. Das im Gas enthaltene elementare Quecksilber kann in Form von metallischen Partikeln oder in Dampfform auftreten. In der Praxis läßt sich partikelförmiges Quecksilber mittels üblicher Staubabscheideverfahren entfernen, während der Quecksilberdampf das Gas während des gesamten Schwefelsäureherstellungsprozesses und bis in das fertige Schwefelsäureprodukt begleitet.

Auf dem Weg zur Wasch-und Kühlanlage setzt sich ein Teil des im Ofen gebildeten metallischen Quecksilbers des SO₂/Hg-haltigen Gases mit anderen Gaskomponenten um, z.B. mit Chalkogeniden, wie Se zu Hgse. Erfahrungsgemäß verbleibt ein bedeutender Anteil des Hg im gasförmigen metallischen Zustand, passiert die gesamte Wasch-und Kühlanlage und verunreinigt nicht nur das Schwefelsäure-Endprodukt, sondern führt auch zu Hg-verunreinigten Waschsäuren, deren Entsorgung Probleme aufwirft.

Es hat daher nicht an Bemühungen gefehlt, das dampfförmige Quecksilber aus SO₂ haltigen Gasen durch geeignete Verfahren zu entfernen.

Aus DE-AS 21 32 231 ist ein Verfahren zum Abscheiden von dampfförmigem Quecksilber aus Gasen bekannt, wobei die Gase mit heißer konzentrierter Schwefelsäure behandelt werden und das metallische Quecksilber sulfatisiert wird. Da die Sulfatisierung der Wasch-und Kühlanlage vorgeschaltet ist, wird eine Verzettelung des Quecksilbers in nachgeschalteten Wasch-und Kühlanlagen vermieden. Besonders problematisch ist bei dem vorbekannten Verfahren jedoch die Handhabung der korrosiven, bis zu 250°C heißen Schwefelsäure.

Des weiteren ist aus DE-AS 22 07 851 ein Verfahren zum Entfernen von Quecksilberdampf aus Gasen bekannt, wobei das Gas mit einer Waschlösung behandelt wird, die Quecksilber-II-ionen in Form von Halogenkomplexen enthält. Das Quecksilber wird durch Oxidation in den einwertigen Zustand (Hg₂Cl₂) überführt und als festes Produkt abfiltriert. Diese Behandlung ist der Wasch-und Kühlanlage nachgeschaltet und dem Trockenturm vorgeschaltet. Somit fallen quecksilberhaltige Waschsäuren an, die entsorgt werden müssen. Problematisch ist ebenfalls die Kristallisationsgefahr von Hg₂Cl₂ im Turm, der durch Verkrustungen oft "zuwächst". Ein besonderer Nachteil dieses Verfahrens ist die Begrenzung der Temperatur auf max. 38°C.

Die vorbekannten Verfahren reduzieren den Hg-Gehalt im gereinigten Gas auf weniger als 1 mg Hg/m³. Bislang beschränkte sich die Anwendung dieser Verfahren auf Röstgase von Zink-Hütten.

Aus "Chem. Abstr." Vol. 96, Ref. 91003z ist schließlich ein Verfahren zum Entfernen von dampfförmigem Quecksilber aus Rauchgasen von Anlagen der Nichteisenmetallgewinnung bekannt, bei welchem dampfförmiges Quecksilber sowie Sauerstoff und Schwefeldioxid enthaltendes Rauchgas mit Kupfer-I-chlorid in Kontakt gebracht wird. Das Kupfersalz kann in Koks eingebracht sein oder als salzsaure Absorptionslösung vorliegen, die auch Kupfersulfat enthalten kann, um die Löslichkeit des Cu-I zu erhöhen. In diesem Verfahren sind Kontaktzeiten von 8 Minuten bis 29 Stunden angegeben, und es werden Hg-Gehalte im gereinigten Gas von 0,004 mg/m³ und weniger erzielt. Ein solches Verfahren ist jedoch wegen seiner ungewöhnlich langen Kontaktzeiten für Zwecke der technischen Praxis nicht brauchbar.

Gemäß dem aus EP-OS 208 036 bekannten Verfahren zur Reinigung von Abgasen, die dampfförmiges Quecksilber enthalten, wird ein chlorhaltiges Material bei erhöhter Temperatur dem quecksilberhaltigen Abgas zugegeben und die Gasmischung auf Temperaturen über 600°C erhitzt. Das gebildete wasserlösliche Quecksilber-II-chlorid wird ausgewaschen und dabei in einen Hg-Chlorokomplex überführt. Die Waschlösung wird mit Eisen-III-Chlorid koaguliert und der Hg-haltige Schlamm sedimentiert und abgetrennt.

Es ist des weiteren bekannt, daß auch in Rauchgasen von Anlagen zur Verbrennung fossiler Brennstoffe sowie in Rauchgasen von Müllverbrennungsanlagen Quecksilberemissionen auftreten können, hier meist in Form von gasförmigem Quecksilber-II-chlorid.

Der Erfindung liegt die Aufgabe zugrunde, die Nachteile der bekannten und insbesondere vorgenannten Verfahren zu vermeiden und in einem wirtschaftlichen Verfahren dampfförmiges metallisches und oxidiertes Quecksilber mit hohem Wirkungsgrad und insbesondere bei großen Gasdurchsätzen aus SO₂-haltigen Gasen zu entfernen.

Ausgehend von einem Verfahren zum Entfernen von gasförmigem Quecksilber aus dieses enthaltenden Gasen, wobei ein Quecksilber sowie Sauerstoff und Schwefeldioxid enthaltender Gasstrom mit einer Kupfersalz enthaltenden Lösung in Kontakt gebracht wird, besteht die Lösung der Aufgabe gemäß der Erfindung darin, daß ein weitgehend entstaubter und gekühlter, metallisches sowie gegebenenfalls oxidiertes Quecksilber enthaltender Gasstrom mit einer Kupfer-II-ionen enthaltenden schwefelsauren, chloridhaltigen Waschlösung bei einer Temperatur von 20 bis 100, vorzugsweise 50 bis 70°C, unter Oxidation des intermediär gebildeten Quecksilber-I und Überführung in einen löslichen Quecksilber-II-chlorokomplex behandelt wird, wobei das intermediär entstehende Kupfer-I wieder in situ aufoxidiert wird und anschließend der gebildete lösliche Quecksilber-II-chlorokomplex aus der sauren Lösung abgetrennt wird. Die Waschstufe wird in an sich bekannter Weise in einem Waschturm vorgenommen, wobei das Gas von unten in einen mit Füllkörpern gefüllten Turm eintritt und entgegen der Waschlösung geführt wird. In der Waschstufe wird eine Temperatur von mehr als 38 °C und insbesondere von 60°C eingehalten. Der Waschturm wird zweckmäßig dem ersten Kühlturm nachgeschaltet. Die Waschlösung enthält Kupfer-II-ionen, vorzugsweise als Kupfer-II-Chlorid, in einer Menge von 0,5 bis 100 und vorzugsweise von 0,5 bis 6 $gCu^{++}/1$ Zweckmäßig wird der Waschturm mit einer Waschlösung etwa folgender Zusammensetzung betrieben:

10 - 500 g/l $H_2SO_4$

1 - 5 g/l Cu

2 - 20 g/l Cl

wobei eine Temperatur von vorzugsweise 60°C eingehalten wird. Unter diesen Bedingungen, wobei noch ein Sauerstoffgehalt von mehr als 1 und bis zu 10 Vol.-% im $SO_2$-haltigen Gas eingestellt ist, wird das über die Stufen Hg-I, Hg-II oxidierte metallische Quecksilber in lösliche Chlorokomplexe überführt, wie $[HgCl_4]^{--}$.

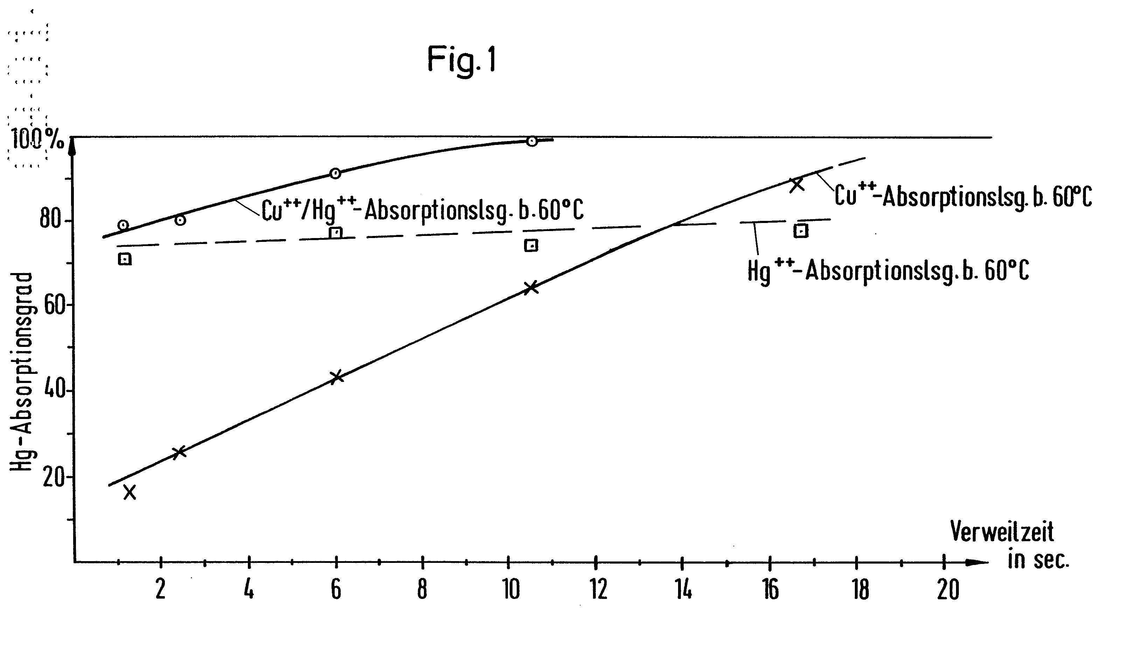

Nach einer weiteren Ausgestaltung der Erfindung enthält die Waschlösung noch zusätzlich Quecksilber-II-ionen. Diese liegen im allgemeinen in einer Menge von 0,1 bis 5 g/1 in der Waschlösung neben 1 bis 5 g/l Kupfer-II-ionen vor. Durch die gleichzeitige Anwesenheit von Kupfer-II-und Quecksilber-II-ionen, vorzugsweise in chloridischer Bindungsform, wird in synergistischer Weise eine erhebliche Verringerung der Verweilzeit bzw. Kontaktzeit des Gases unter praktisch vollständiger Entfernung des Quecksilbers bewirkt. Beispielsweise wird ein Hg-Absorptionsgrad von praktisch 100 % bei einer Verweilzeit von 10 sec bei 60°C mit einer Absorptions-bzw. Waschlösung erzielt, die $Cu^{2+}$-und $Hg^{2+}$-ionen enthält, während eine nur $Cu^{2+}$-ionen enthaltende Lösung einen Hg-Absorptionsgrad von 65 %, und eine nur $Hg^{2+}$-ionen enthaltende Lösung einen Hg-Absorptionsgrad von etwa 70 % unter sonst gleichen Bedingungen erzielt (Fig. 1).

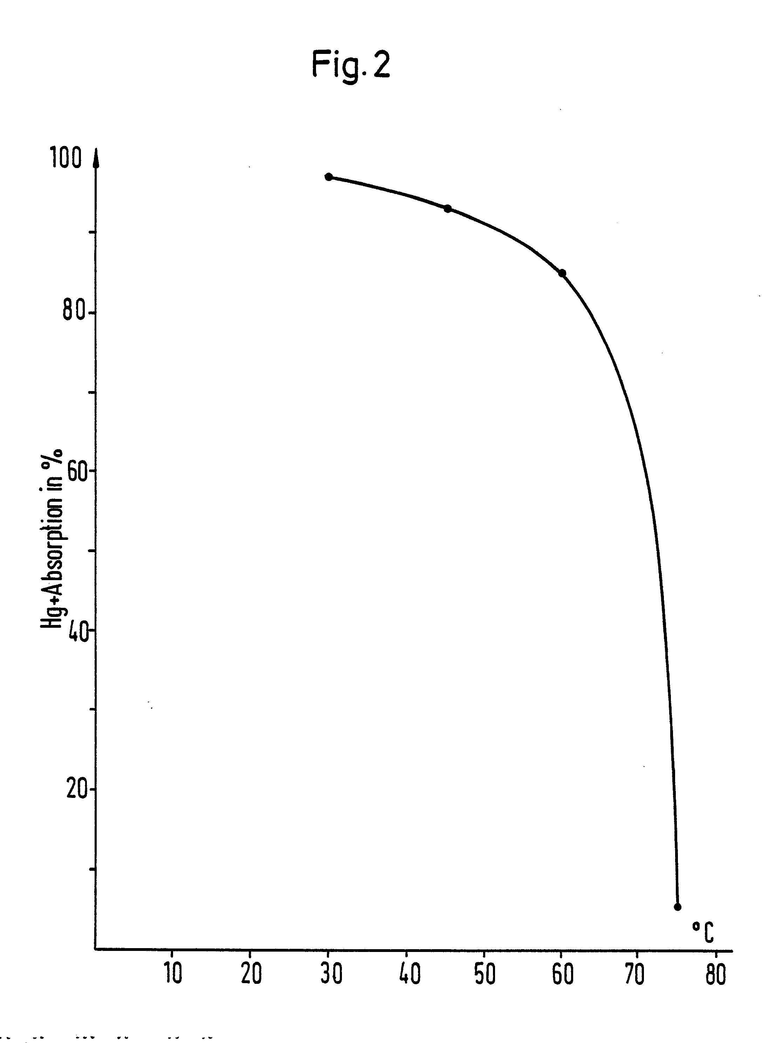

Es wurde des weiteren gefunden, daß die Wirksamkeit von Absorptionslösungen, die nur $Hg^{2+}$-ionen enthalten (Fig. 2), sehr stark von der Temperatur abhängig ist, in der Weise, daß mit steigender Temperatur (etwa > 38 °C) die Hg-Absorption sinkt gemäß:

$$Hg^0 \;+\; Hg^{2+} \quad \underset{T > 38°C}{\overset{T < 38°C}{\rightleftharpoons}} \quad 2\,Hg^+$$

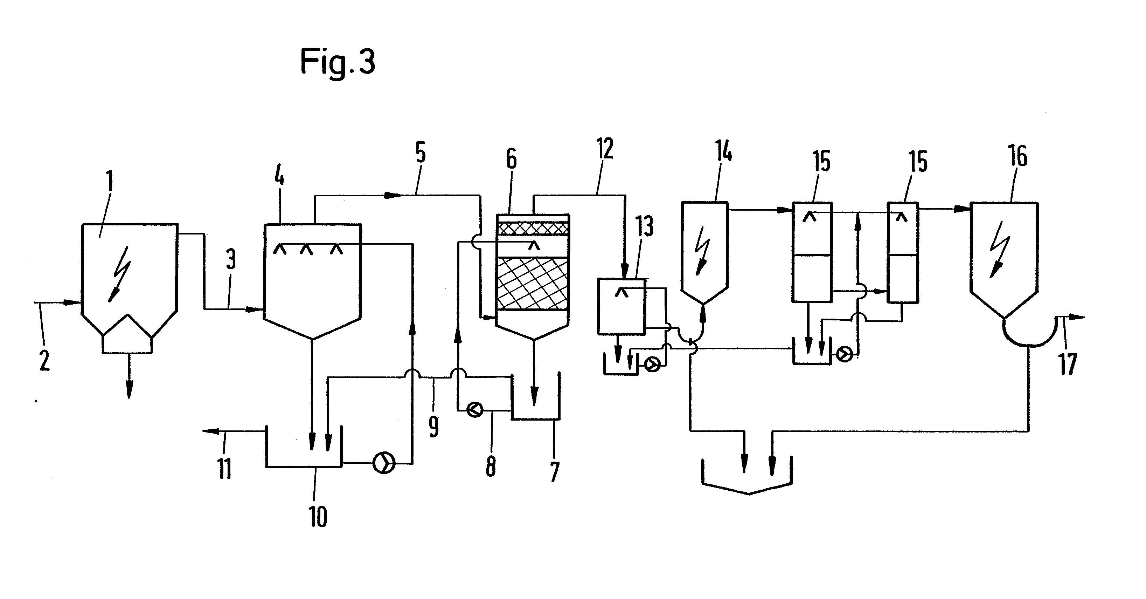

Die Kombination $Cu^{2+}/Hg^{2+}$ kann also bei höheren Temperaturen eingesetzt werden. Daraus folgt, daß die $Hg^0$-Absorption schon am Anfang einer zur Gas-Reinigung notwendigen Wasch-und Kühlanlage eingesetzt werden kann (Fig. 3). Der sich daraus ergebende große Vorteil ist in dem Vermeiden der Hg-Verzettelung zu sehen.

Es wurde ferner gefunden, daß das $O_2/SO_2$-haltige Gas die bei der $Hg^0$-Oxidation intermediär entstehenden $Hg^{1+}$ und $Cu^{1+}$-Verbindungen wieder in situ aufoxidiert.

$Cu^{2+} + Hg^0 \rightarrow Cu^{1+} + Hg^{1+}$

$Hg^{2+} + Hg^0 \rightarrow 2\,Hg^{1+}$

$Cu^{1+} + bzw. Hg^{1+} \rightarrow Cu^{2+} bzw. Hg^{2+}$

Das heißt, das Oxidationssystem erneuert sich ständig von selbst und es brauchen keine zusätzlichen Oxidationsmitel für die Oxidation des $Hg^+$ und $Cu^+$ herangeführt zu werden. Somit wird auch das Entstehen von kristallinen Produkten des $Hg_2Cl_2$ und des CuCl vermieden, die letztlich zu einem Verstopfen des Reaktionsturmes führen können.

Die in der schwefelsauren, chloridhaltigen Waschlösung enthaltenen löslichen Quecksilber-II-chlorokomplexe können hieraus in verschiedener Weise entfernt werden.

Beispielsweise kann die Waschlösung mit dendritischem Kupferpulver einer Schüttdichte von etwa 0,9 bis 2,0 g/cm³ behandelt und das quecksilberhaltige Zementat abgetrennt und nach üblichen Methoden auf Quecksilber aufgearbeitet werden (Patentanmeldung P 36 16 792.4).

Eine weitere Möglichkeit sieht die Entfernung mittels Ionenaustauscher vor. Hierzu wird die Quecksilber-II-chlorokomplex-haltige Waschlösung über einen Ionenaustauscher geführt. Der mit Quecksilber beladene Ionenaustauscher wird dann mit einer Thioharnstofflösung behandelt und hierin das Quecksilber aufgenommen. Die Regeneration des Thioharnstoffes erfolgt mit $H_2S$ bzw. durch Hydrolyse des Thioharnstoffes mit Alkali.

Nach einer weiteren Methode können die löslichen Quecksilber-II-chlorokomplexe aus der Waschlösung mittels Solventextraktion extrahiert werden. Hierbei dient tert. Butylphosphat als Extraktionsmittel. Erforderlich ist ein Verhältnis von wäßriger anorganischer Phase zu organischer Phase von 10 : 1. Die Regeneration erfolgt mit NaCl-Lösung. Das Hg wird mit $H_2S$ abgetrennt.

Die Vorteile des erfindungsgemäßen Verfahrens sind darin zu sehen, daß insgesamt mit weniger toxischen Waschlösungen gearbeitet wird, eine systemimmanente Aufoxidation der $Hg^+$ und $Cu^+$-Verbindungen erfolgt, welche bei der $Hg°$ Oxidation intermediär entstehen. Ferner stellt sich durch den aus dem Kühlturm entweichenden Waschsäuresprüh in dem nachfolgenden Waschturm die entsprechende Cu-und Chlorid-Konzentration ein, die zur Hg-Oxidation erforderlich ist. Der Cu-und Cl-Gehalt des gesamten Waschsäuresprühs entsteht durch Auflösung von Flugstaub im Säurekreislauf des Kühlturms. Bei Einsatz des Verfahrens in einer Kupferhütte wird das Laugungsmittel somit von dem System geliefert, und es ist keine Regeneration der Cu-Lösung erforderlich.

Das Verfahren der Erfindung wird insbesondere zur Entfernung von gasförmigem metallischem Quecksilber aus Gasen von Anlagen zur NE-Metallgewinnung eingesetzt. Vorteilhaft findet es aber auch Anwendung auf die Entfernung von Quecksilber aus Rauchgasen von Müllverbrennungsanlagen und aus Rauchgasen von Anlagen zur Verbrennung fossiler Brennstoffe. Hier sorgen Cl-ionen in der Waschlösung für die Stabilisierung von $HgCl_2$ als $[HgCl_4]^{2-}$, während $Cu^{2+}$-ionen das $Hg°$ oxidieren.

Die Erfindung wird anhand des Fließschemas der Fig. 1 sowie anhand von Ausführungsbeispielen näher und beispielhaft erläutert.

Die aus einem metallurgischen Ofen, wie Konverter, Röst-oder Schwebeschmelzofen, austretenden, dampfförmiges Quecksilber sowie Sauerstoff, Stickstoff und Schwefeldioxid enthaltenden Gase gelangen über Leitung (2) in eine Heiß-EGR-Anlage (1), von wo die weitgehend entstaubten, etwa 320°C heißen Gase über Leitung (3) in den Kühlturm (4) eintreten. Über Leitung (5) werden die auf einer Temperatur von etwa 50 bis 100°C befindlichen Gase in den mit Füllkörpern versehenen Waschturm (6) im Gegenstrom zur Waschlösung (8) eingeführt. Ein Teil der Waschlösung (8) wird über (9) entnommen und mit der Kühlflüssigkeit des Kühlturms (4) im Behälter (10) vereinigt, um das Quecksilber an einer einzigen Stelle ausschleusen zu können. Aus dem Behälter (10) gelangt die mit löslichen Quecksilberchlorokomplexen angereicherte Waschsäure über Leitung (11) zur Aufarbeitung mittels Cu-Pulver. Das weitgehend gereinigte und nunmehr quecksilberfreie Gas verläßt über Leitung (12) den Waschturm (6), wird über weitere Waschanlagen (13, 15) und EGR-Anlagen (14, 16) einer Feinreinigung hinsichtlich $SO_3$ und Halogenen zugeführt, so daß bei (17) ein Reingas mit einem Gehalt von ca. 10 Vol.-% $SO_2$ und < 0,1 mg Hg/Nm³ für die $SO_2$-Katalyse entnommen werden kann.

Beispiel 1

In einem Pilotversuch wurde das auf ca. 50 bis 100°C gekühlte $SO_2$-haltige Gas eines vereinigten Gasstroms aus einem Schwebeschmelzofen und einem Konverter einer Kupferhütte verwendet. Der Gasstrom (ca. 150 m³/h) einer Zusammensetzung
5 bis 10 Vol.-% $SO_2$
ca. 5 Vol.-% $O_2$
Rest $N_2$
wurde in der Leitung (5) der Fig. 3 durch Eindosierung von Quecksilberdampf mit 2 bis 23 mg $Hg°$ Dampf/Nm³ angereichert. Zur Oxidation des metallischen Quecksilbers diente ein mit Füllkörpern ausgerüsteter und mit der unten genannten Waschlösung betriebener Turm von ca. 0,4 m Durchmesser und 6 bis 10 m Höhe. Das Gas trat unterhalb des Füllkörperbettes ein; im Gegenstrom dazu lief die Waschlösung mit einer Berieselungsmenge von ca. 1 bis 1,8 m³/h und einer Temperatur von 50 bis 70°C. Die Waschlösung hatte die Zusammensetzung
200 bis 300 g/l $H_2SO_4$
5 g/l HCl
0,2 bis 0,3 g/l $Hg^{2+}$
3 g/l $Cu^{2+}$.

Ein Sprühabscheider reduzierte bzw. verhinderte den Übergang von mechanisch mitgerissener Waschlösung.

Im Reingas wurden $Hg°$-Werte von 0,02 bis 0,05 mg/Nm³ gemessen.

Beispiel 2

In diesem Beispiel wird die Hg-Entfernung aus einem Rauchgas anhand eines Laborversuches erläutert. Ein Rauchgasstrom mit ca. 1 Vol.-% $SO_2$ wurde bei ca. 35°C durch eine wäßrige $HgCl_2$-haltige Lösung geleitet. Der Hg-Gehalt des Gases betrug danach ca. 0,5 mg/Nm³. Dieser Gasstrom wurde in einer Waschflasche mit einer Waschlösung der Zusammensetzung wie in Beispiel 1 behandelt. Im Reingas wurden Hg-Werte von 0,01 mg/Nm³ gemessen.

Beispiel 3

In diesem Beispiel wird das Quecksilber aus Hg-haltigen Abfallsäuren in verschiedener Weise entfernt.

a) Zementation von $Hg_2^{2+}$ aus Waschsäuren mittels Cu-Pulver

Eine Waschsäure der Zusammensetzung
23,5 mg/l Cl
16,75 g/l Cl
12,0 g/l As
3,85 g/l $Cu^{2+}$
650 g/l $H_2SO_4$
wurde mit dendritischem Cu-Pulver einer Schüttdichte von 0,95 bis 1,10 g/cm³ behandelt. Hierzu wurden in einem Rührbehälter 1,5 l der oben angeführten Waschsäure auf ca. 80°C aufgeheizt und unter lebhaftem Rühren mit 3 g Cu-Pulver versetzt.

Aus den in Abhängigkeit von der Zeit analysierten Proben ergaben sich folgende $Hg^2$-Konzentrationen in der behandelten Waschsäure:

| Reaktionszeit (min) | Hg (mg/l) |
|---|---|
| 0 | 23,5 |
| 10 | 4,4 |
| 30 | 0,08 |
| 60 | 0,04 |
| 120 | 0,03 |
| 180 | 0,02 |

b) Absorption von $Hg^{2+}$ an einem Anionenaustauscher; Regenerieren des Austauschers mit Thioharnstoff

Ein Glaszylinder von 30 mm Durchmesser und 280 mm Höhe wurde mit dem Anionenaustauscher-Harz Lewatit M 500 der Firma Bayer AG gefüllt. Durch diese Harzsäule von 200 ml wurde Abfallsäure der Zusammensetzung
0,08 bis 3,5 g/l $Hg^{2+}$
3,69 g/l $Cu^{2+}$
22,9 g/l Cl
10,5 g/l As
302 g/l $H_2SO_4$
geleitet. Die Abfallsäure einer Temperatur von ca. 60°C durchströmte die Harzsäule mit einer Geschwindigkeit von ca. 1,5 l/h.

Die $Hg^{2+}$-Konzentration in der abfließenden Säure lag (unabhängig von der Konzentration des Hg im Vorlauf) bei 0,05 mg $Hg^{2+}$/l Die vom Harz bis zur Sättigung aufgenommene Hg-Menge betrug ca. 150 $Hg^{2+}$/l Harz.

Aus dem Anionenaustauscher wurde das $Cu^{2+}$ mit Wasser ausgewaschen und sodann das absorbierte $Hg^{2+}$ mit Thioharnstoff (10%ige, ca. 60°C warme wäßrige Lösung) eluiert. Durch fünfmalige Behandlung des Austauscherharzes mit jeweils 100 ml Thioharnstoff-Lösung/100 ml $Hg^{2+}$-haltiges Harz wurde das Quecksilber quantitativ aus dem Austauscherharz eluiert.

Zur Entfernung des $Hg^{2+}$ aus der Thioharnstoff-Lösung wurde diese auf ca. 60°C erwärmt und unter Rühren mit NaOH-Lösung auf einen pH-Wert von 8 bis 9 eingestellt. Dabei fiel das $Hg^{2+}$ als schwarzes Hg-(II)-sulfid aus.

Die Hg-Restlöslichkeit betrug 0,05 mg Hg2 + /l.


c) Extraktion von $Hg^{2+}$ aus Waschsäure mittels tertiärem Butylphosphat (TBP)

Regenerieren des Extraktanten sowie Ausbringen des Hg.

500 ml einer Waschsäure der Zusammensetzung 110 mg/l $Hg^{2+}$

19,5 g/l Cl

7,9 g/l As

1,8 g/l Cu

185 g/l $H_2SO_4$

wurden mit 50 ml TBP bei 60°C während 10 min durch kräftiges Rühren vermischt. Nach Trennung der Phasen wurde die organische Phase abgetrennt und die Extraktion noch zweimal mit frischem TBP wiederholt.

Die vereinigten drei organischen Phasen wurden mit 100 ml NaCl-Lösung (250 g/l) bei ca. 60°C durch intensives Rühren durchmischt.

Nach Trennung der Phasen wurde das Eluieren noch viermal mit jeweils frischer Kochsalz-Lösung wiederholt.

1. Eluat 3,86 g Hg/l
2. Eluat 0,75 g Hg/l
3. Eluat 0,30 g Hg/l
4. Eluat 0,15 g Hg/l
5. Eluat 0,05 g Hg/l

Somit wurden ca. 93 % des aus der Waschsäure extrahierten Hg aus dem TBP eluiert.

Aus den vereinigten Kochsalzlösungen wurde das Hg durch Einleiten von $H_2S$ als Hg(II)-sulfid ausgefällt und abgetrennt.

Die Hg-Restkonzentration betrug 0,9 mg Hg/l.


**Ansprüche**

1. Verfahren zum Entfernen von gasförmigem Quecksilber aus dieses enthaltenden Gasen, wobei ein Quecksilber sowie Sauerstoff und Schwefeldioxid enthaltender Gasstrom mit einer Kupfersalz enthaltenden Lösung in Kontakt gebracht wird, dadurch gekennzeichnet, daß ein weitgehend entstaubter und gekühlter, metallisches sowie gegebenenfalls oxidiertes Quecksilber enthaltender Gasstrom mit einer Kupfer-II-ionen enthaltenden schwefelsauren, chloridhaltigen Waschlösung bei einer Temperatur von 20 bis 100, vorzugsweise 50 bis 70°C, unter Oxidation des intermediär gebildeten Quecksilber-I und Überführung in einen löslichen Quecksilber-II-chlorokomplex behandelt wird, wobei das intermediär entstehende Kupfer-I wieder aufoxidiert wird und anschließend der gebildete lösliche Quecksilber-II-chlorokomplex aus der sauren Lösung abgetrennt wird.

2. Verfahren nach Anspruch 1, dadurch gekennzeichnet, daß die Waschlösung Kupfer-II-ionen, vorzugsweise als Kupfer-II-Chlorid, in einer Menge von 0,5 bis 100, vorzugsweise 0,5 bis 6 $gCu^{++}$/l, enthält.

3. Verfahren nach den Ansprüchen 1 und 2, dadurch gekennzeichnet, daß die Waschlösung zusätzlich Quecksilber-II-ionen enthält.

4. Verfahren nach den Ansprüchen 1 bis 3, dadurch gekennzeichnet, daß die Waschlösung Quecksilber-II-ionen, vorzugsweise als Quecksilber-II-Chlorid, in einer Menge von 0,1 bis 5 $gHg^{++}$/l enthält.

5. Verfahren nach den Ansprüchen 1 bis 4, dadurch gekennzeichnet, daß die Quecksilber-II-chlorokomplex-Lösung über einen Ionenaustauscher geleitet, der mit Quecksilber beladene Austauscher mit Thioharnstofflösung von Quecksilber befreit und der Thioharnstoff regeneriert wird.

6. Verfahren nach den Ansprüchen 1 bis 4, dadurch gekennzeichnet, daß der gelöste Quecksilber-II-chlorokomplex mittels Solventextraktion aus der Lösung entfernt wird.

7. Verfahren nach den Ansprüchen 1 bis 4, dadurch gekennzeichnet, daß die Quecksilber-II-chlorokomplex-Lösung mit dendritischem Kupferpulver unter Amalgamierung behandelt wird.

Fig.1

Cu$^{++}$-Absorptionslsg. b. 60°C

Hg$^{++}$-Absorptionslsg. b. 60°C

Cu$^{++}$/Hg$^{++}$-Absorptionslsg. b. 60°C

Verweilzeit in sec.

Hg-Absorptionsgrad

# Fig. 2

Fig.3

Europäisches
Patentamt

EUROPÄISCHER RECHERCHENBERICHT

Nummer der Anmeldung

EP 88 20 0020

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DERWENT JAPANESE PATENTS REPORT, Band 81, Nr. 6, Februar 1980, Klasse J8-J, Sektion Ch, Seite 2, Nr. J81004291, Derwent Publications Ltd, London, GB; & JP-A-55 047 120 (SUMITOMO CHEMICAL K.K.) 29-01-1981 * Zusammenfassung * --- | 1 | B 01 D 53/34 C 22 B 43/00 |
| A | EP-A-0 064 962 (BOLIDEN) --- | | |
| A | GB-A- 872 985 (CANADIAN INDUSTRIES) ----- | | |

RECHERCHIERTE SACHGEBIETE (Int. Cl.4)

B 01 D 53/00
C 22 B 43/00

Der vorliegende Recherchenbericht wurde für alle Patentansprüche erstellt

| Recherchenort | Abschlußdatum der Recherche | Prüfer |
|---|---|---|
| DEN HAAG | 26-04-1988 | BOGAERTS M. L. M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)